# EUROPEAN PATENT APPLICATION

(11) **EP 4 545 778 A1**
(43) Date of publication of application: **30.04.2025**
(21) Application number: 23425055.3
(22) Date of filing: 27.10.2023
(51) Int. Cl.: F02M 21/02

(54) **AMMONIA MITIGATION SYSTEM FOR AMMONIA FUEL SUPPLY SYSTEM AND AMMONIA ENGINE AND A METHOD FOR OPERATING THE MITIGATION SYSTEM**

(71) Applicant: Alfa Laval Corporate AB, 221 00 Lund (SE)
(72) Inventor: Spazzadeschi, Nicoletta, 20900 MONZA (IT); Casartelli, Daniele, 20852 VILLASANTA (IT); Taufiq, Danish, 25135 Brescia (BS) (IT)
(74) Representative: Alfa Laval Attorneys

(57) **Abstract**

The disclosure relates to an ammonia mitigation system (100) for receiving ammonia-containing streams generated by vent gases and/or vent streams during purging of an ammonia fuel supply system (10) and/or ammonia-fueled engine (20), the system being in fluid communication with an exhaust piping (160) leading the ammonia-containing streams with reduced ammonia content to the atmosphere, the system comprising: a first ammonia mitigating device (130); a second ammonia mitigating device (140); a first supply line (111) for ammonia-containing streams arranged in fluid communication with the ammonia fuel supply system (10) and the first and second ammonia mitigating devices (130; 140); a second supply line (112) for ammonia-containing streams in fluid communication with the ammonia-fueled engine (20), the ammonia fuel supply system (10) and the first and second ammonia mitigating devices (130; 140); and a valve device (150) configured to fluidly connect the first and second supply lines, and the first and second ammonia mitigating devices (130; 140). The disclosure also relates to a method of operating the system.

## Description

### Technical field

The present invention relates to an ammonia mitigation system for ammonia-containing streams generated by vent gases and/or vent streams during purging of an ammonia supply system and/or ammonia-fueled engine and to a method of operating the ammonia mitigation system as defined in the introductory parts of the independent claims.

### Background art

Ammonia is one of the strategic fuels to achieve the International Maritime Organization's ambitious decarbonization goals over the next decades. The marine shipping sector transporting people and goods worldwide plays a key role in the global economy. As per today, marine vessels are estimated to account for 2.9% of worldwide carbon dioxide emissions. The International Maritime Organization (IMO) has adopted a strategy to progressively reduce the marine industry's greenhouse gas (GHG) emissions, in line with the Paris Agreement on climate change. The IMO strategy to progressively reduce the GHGs from shipping, adopted by the Marine Environment Protection Committee (MEPC) in 2018, includes inter alia the objectives of reducing CO2 emissions per transport work, as an average across international shipping by at least 40% by 2030, compared to the levels of 2008 and reducing total annual GHG emissions by at least 50% by 2050, compared to 2008.

Ammonia is traditionally made from fossil feedstocks via syngas (black ammonia). Renewable ammonia, instead, is produced from hydrogen produced from water by electrolysis via renewable electricity (green ammonia). When produced using renewable energy, ammonia can be considered as a carbon-neutral fuel in a well-to-wake perspective. When produced using hydrogen made from fossil energy sources with carbon capture and storage (>90% capture rate), ammonia is classified as "blue ammonia". Both green and blue ammonia provide shipowners a fuel option that could assist in meeting the International Maritime Organization's (IMO) 2050 GHG emissions reduction targets.

Ammonia is, however, a toxic substance and the ammonia release to the atmosphere should be controlled and kept low. A solution to reduce the concentration of ammonia in vent gases released to atmosphere is therefore needed. EP4184052 A1 shows a system for treating the ammonia-containing vent gases by introducing the ammonia to a water-containing treatment tank. However, such treatment may not provide sufficiently low ammonia content level in the treated gas, which is released into the atmosphere. Therefore, further improvements are needed.

### Summary

The maritime industry has experience with ammonia as it is transported on gas carriers and it is a well-known refrigerant used in the industry and onboard ships. However, the introduction of ammonia as fuel creates new safety challenges related to bunkering, onboard storage, supply and consumption. Ammonia is less flammable than other types of alternative fuels, e.g. liquefied natural gas (LNG), and is related with a lower, but not ignorable, explosion risk. The main safety issue given by ammonia is its toxicity, as mentioned above. Due to the toxicity, it is important to be able to control all leakage scenarios and ensure ammonia removal before releasing it to the atmosphere.

One objective with the present invention is to further develop and improve the technology for using ammonia onboard ships for propulsion and for auxiliary power generation, and especially technologies for preventing ammonia from escaping to the atmosphere in case of vent. Ammonia-containing vents can be generated in case of overpressure, purging procedures for emptying supply lines and equipment from ammonia, shutdown etc. Technology solutions are needed to remove ammonia from vents to comply with emission limits imposed by applicable rules. Solutions for ammonia emission abatement from exhaust gases already exist in industrial sectors operating with ammonia. However, the solutions cannot be normally applied as such on the maritime sector because of the different applications, such as the limited safety distances available on vessels and a limited possibility of safe evacuation when at sea.

It is therefore an objective of the present invention to mitigate, alleviate or eliminate one or more of the above-identified deficiencies and disadvantages in the prior art and solve at least the above-mentioned problems.

It is an objective of the present invention to provide a system and a method for handling ammonia-containing vent streams generated by a fuel supply system and an engine operating with ammonia, as well as a solution and a method for removing ammonia before discharging inert gas to atmosphere.

It is a further objective of the present invention to provide an ammonia mitigation system in which ammonia-containing vent gases are treated and that is suitable for use in maritime sector and onboard of marine vessels. Additionally, it is an objective to provide a mitigation system that is safe to use even when there are limited safety distances available and possibility of safe evacuation when at sea.

The present invention overcomes or alleviates at least some of the drawbacks of the prior art and the objectives are achieved with a system according to the appended claims.

According to a first aspect there is provided an ammonia mitigation system for receiving ammonia-containing streams generated by vent gases and/or vent streams during purging of an ammonia fuel supply system and/or ammonia-fueled engine. The streams are fluidic streams that may comprise gas and/or liquid. The system is in fluid communication with an exhaust piping leading the ammonia-containing streams with reduced ammonia content to the atmosphere. The system comprises:
- a first ammonia mitigating device;
- a second ammonia mitigating device;
- a first supply line for ammonia-containing streams arranged in fluid communication with the ammonia fuel supply system and the first and second ammonia mitigating devices;
- a second supply line for ammonia-containing streams in fluid communication with the ammonia-fueled engine, the ammonia fuel supply system and the first and second ammonia mitigating devices; and
- a valve device configured to fluidly connect the first and second supply lines and the first and second ammonia mitigating devices.

By the ammonia mitigation system described a solution for removing ammonia from the exhaust gases before discharging inert gas to atmosphere is provided.

The first ammonia mitigating device comprises a water tank storing water having lower and higher water threshold levels in the tank. Ammonia in the ammonia-containing streams can be at least partly absorbed in the water, whereby the content of ammonia in the gas streams can be reduced. The ammonia-containing streams can be arranged to be supplied into the tank below the lower threshold level, whereby it can be assured that the ammonia-containing stream will come into contact with water.

The first ammonia mitigating device may comprise a water level monitoring device arranged to monitor water level and alert when the water level is lower than the lower water threshold level or higher than the higher threshold level in the tank. In this way it is possible to adjust the water level when required.

The water level monitoring device may be arranged in communication with a water filling device and a drain device. Suitably the communication is arranged via a communication link, which may be wireless or via a physical cable, connecting the devices to a control unit. The water filling device may be configured to start to fill water to the first ammonia mitigating device, when the water level is lower than the lower water threshold level. Alternatively, the drain device may be configured to open when the water level is higher than the higher water threshold level. In this way it can be ensured that the water level in the tank is within the lower and higher threshold levels.

The first ammonia mitigating device may comprise an ammonia content monitoring device, which is arranged in communication with a drain configured to start draining when the ammonia content in the water tank is above an ammonia threshold value, and/or a water filling device configured to start to fill water when the ammonia content in the water tank is above the ammonia threshold value and below the higher water threshold level. In this way it can be ensured that the ammonia content can be diluted in a safe way.

The second ammonia mitigating device may comprise an acid tank storing an acid solution and having a lower and higher acid threshold levels in the tank. The ammonia-containing streams may be arranged to be supplied into the tank below the lower threshold level. In this way it can be ensured that the streams will come into contact with the acid solution.

The second ammonia mitigating device may comprise an acid level monitoring device arranged to monitor acid level and alert when the acid level is lower than the lower threshold level or higher than the higher threshold level in the tank. In this way it can be ensured that the acid solution level in the tank is within the lower and higher threshold levels.

The second ammonia mitigating device may comprise an acid content monitoring device in communication with an acid tank drain device and/or an acid refill device configured to fill acid when acid solution content or acidity in the second ammonia mitigating device is below a threshold.

The first and/or second ammonia mitigating device may comprise a temperature monitoring device configured generate an alarm when the temperature in the first and/or second ammonia mitigating device is higher than a threshold temperature. This will improve the safety of the system, since overheating can be avoided, which may be possible due to the ammonia absorption and neutralization being exothermic processes, releasing heat to water and/or acid solutions.

The first and/or second ammonia mitigating device may comprise or be connected to a cooling device. The cooling device may be for example a submerged cooling coil or an external cooling system. The cooling device allows for a continuous or quicker cooling of the water and/or the acid solution in the respective first and/or second ammonia mitigation devices.

Suitably, the exhaust piping is fluidly connected to the second ammonia mitigating device. The second ammonia mitigating device is always used in the ammonia mitigation, while it is possible in some modes of operation to by-pass the first ammonia mitigation device.

An ammonia gas detector may be arranged in fluid communication with the released gases in the exhaust piping. The ammonia gas detector may be configured to generate an alarm when the ammonia content is above a threshold. In this way, it is possible to take an action in the system to further increase ammonia mitigation.

The system may comprise a gas dilution system fluidly connected to the exhaust piping. The dilution system may comprise a fan device configured for exhaust gas dilution with air up to a limit threshold. In this way it can be ensured that the exhaust gases do not exceed the ammonia content limits.

The ammonia mitigation system may be fluidly connected to a catch tank. The catch tank is associated with the fuel supply system and is suitably located close to the ammonia fuel supply system and can be located inside the ammonia fuel supply system. The catch tank may be used for example for engine pressure relief and to receive a certain amount of gas/liquid ammonia. In this way, the safety of the system can be improved.

The ammonia mitigation system may include a vacuum protection system comprising a vacuum breaker and/or an air inlet connection activated by a pressure transmitter detecting low pressure. Thereby, the ammonia mitigation system is protected from vacuum. The vacuum protection system may be located on the connecting pipe between the water tank and acid tank.

According to a second aspect, the present invention relates to a method of operating the ammonia mitigation system described above. The method comprises:
- supplying the gas and/or liquid ammonia stream from the ammonia fuel supply system and/or the engine to the second ammonia mitigation device, optionally via the first ammonia mitigation device, based on a mode the ammonia fuel supply system and/or the engine are operated upstream of the ammonia mitigation system, and
- releasing the mitigated stream to the atmosphere via the vent mast.

According to a variant, the ammonia mitigation system is fluidly connected to a catch tank associated with the ammonia fuel supply system. The catch tank may be located close to or inside the ammonia fuel system. The upstream mode of operating the engine comprises shutting down the ammonia fuel supply system and performing emergency or engine liquid purging, and releasing engine pressure or supplying ammonia removed during purging of the engine to the catch tank, which is fluidly connected to the engine and the ammonia mitigation system. The method of operating the ammonia mitigation system comprises:
- directing a gas/liquid stream from venting of the catch tank via a connecting supply line, to the first ammonia mitigating device, and
- subsequently directing the venting stream to the second ammonia mitigating device, and
- directing the ammonia mitigated venting stream to the vent mast before releasing the stream to the atmosphere.

According to another variant, the mode of operating the ammonia mitigation system is performed during engine gas purging generating ammonia-containing streams and comprising
- directing the ammonia-containing stream from the engine via the second supply line and the valve device to the second ammonia mitigation device via connecting via connecting supply lines, and
- directing the ammonia mitigated stream to the vent mast before releasing the stream to the atmosphere.

According to a yet another variant, the mode of operating the ammonia mitigation system is performed during ammonia fuel supply system purging generating ammonia-containing vent streams and comprising
- directing the ammonia-containing vent stream from the ammonia fuel supply system via connecting supply lines and the valve device and a connecting supply line to the first ammonia mitigation device,
- directing ammonia-containing stream from the first ammonia mitigation device to the second ammonia mitigation device via connecting supply lines, and
- directing the ammonia mitigated stream to the vent mast before releasing the stream to the atmosphere.

Effects and features of the second aspect is to a large extent analogous to those described above in connection with the first aspect. Embodiments mentioned in relation to the first aspect are largely compatible with the second aspect.

Additional objectives, advantages and novel features of the invention will be apparent to one skilled in the art from the following details, and through exercising the invention. While the invention is described below, it should be apparent that the invention may not be limited to the specifically described details. One skilled in the art, having access to the teachings herein, will recognize additional applications, modifications and incorporations in other areas, which are within the scope of the invention.

### Brief descriptions of the drawings

The above objects, as well as additional objects, features and advantages of the present disclosure, will be more fully appreciated by reference to the following illustrative and non-limiting detailed description of example embodiments of the present disclosure, when taken in conjunction with the accompanying drawings.
Fig. 1 schematically illustrates an overview of an ammonia fuel line where the ammonia mitigation system is included according to an example;
Fig. 2 schematically illustrates components of an ammonia mitigation system according to an example;
Fig. 3 schematically illustrates an ammonia mitigation system scheme in emergency and/or engine liquid purging mode according to an example;
Fig. 4 schematically illustrates an ammonia mitigation system scheme in engine gas purging mode according to an example;
Fig. 5 schematically illustrates an ammonia mitigation system scheme in gas ammonia fuel supply system purging mode according to an example.
Fig. 6 schematically illustrates a further example of an ammonia mitigation system scheme operated in a vent mode handling vapors contaminated with ammonia vent streams generated from the ammonia fuel supply system overpressure protecting devices and/or from ammonia tanks and/or from bleed valves.

### Detailed description

The present disclosure will now be described with reference to the accompanying drawings, in which preferred example embodiments of the disclosure are shown. The disclosure may, however, be embodied in other forms and should not be construed as limited to the herein disclosed embodiments. The disclosed embodiments are provided to fully convey the scope of the disclosure to the skilled person.

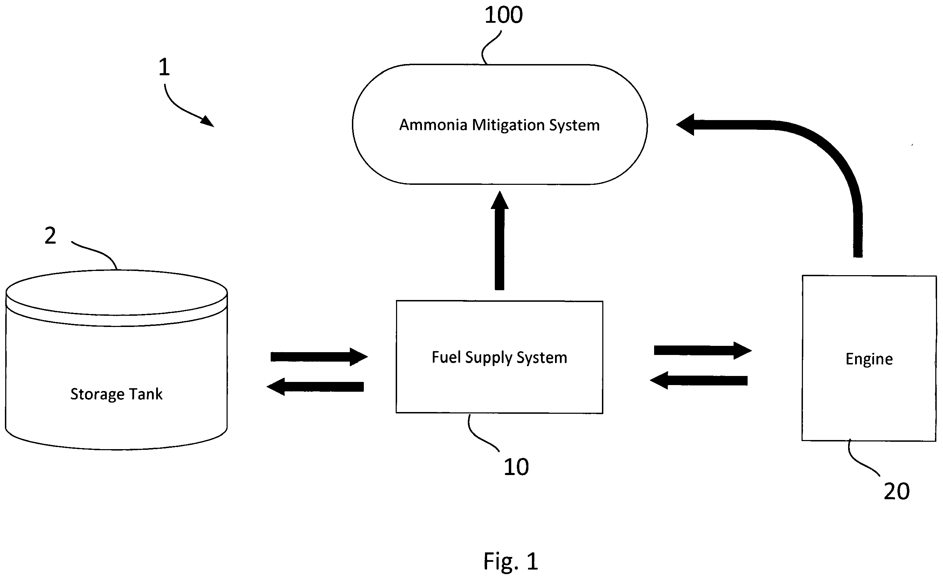

Figure 1 schematically illustrates an overview 1 of marine fuel storage tank 2, a fuel supply system 10, an ammonia mitigation system 100 and an engine 20 and the connections among each component. Ammonia is stored in the storage tank 2 which is arranged in fluid communication with a fuel supply system 10 via associated supply lines, pumps and valves. The ammonia consuming device in the illustrated example is an internal combustion engine 20 configured such that it can use ammonia as fuel. The engine 20 is in fluid communication with the fuel supply system 10 and receives ammonia as a fuel from the fuel supply system. The ammonia can be returned to the storage tank 2 from the fuel supply system 10. The ammonia mitigation system 100 can receive vent/purging gas or liquid streams from the fuel supply system 10 and the engine 20 and reduces ammonia content in emissions to the atmosphere.

The objective of the present invention is to provide a technical configuration for a system for reducing ammonia content in the vent/purging streams generated from the ammonia fuel supply system and engine. The present invention additionally provides a method of operating the ammonia mitigation system with different modes depending on the upstream operation modes of the fuel supply system and/or the engine.

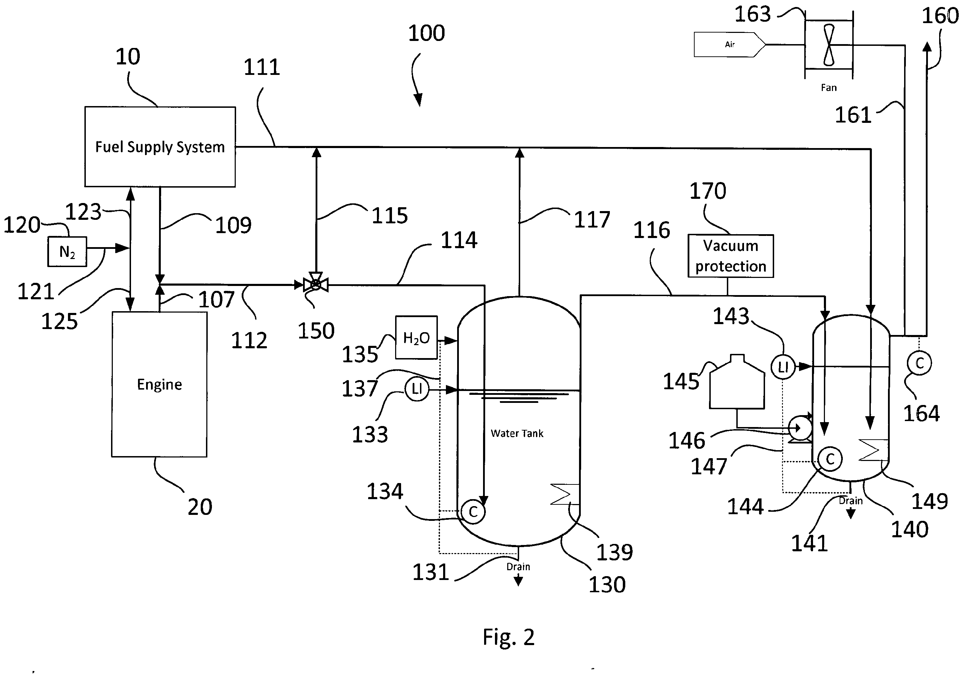

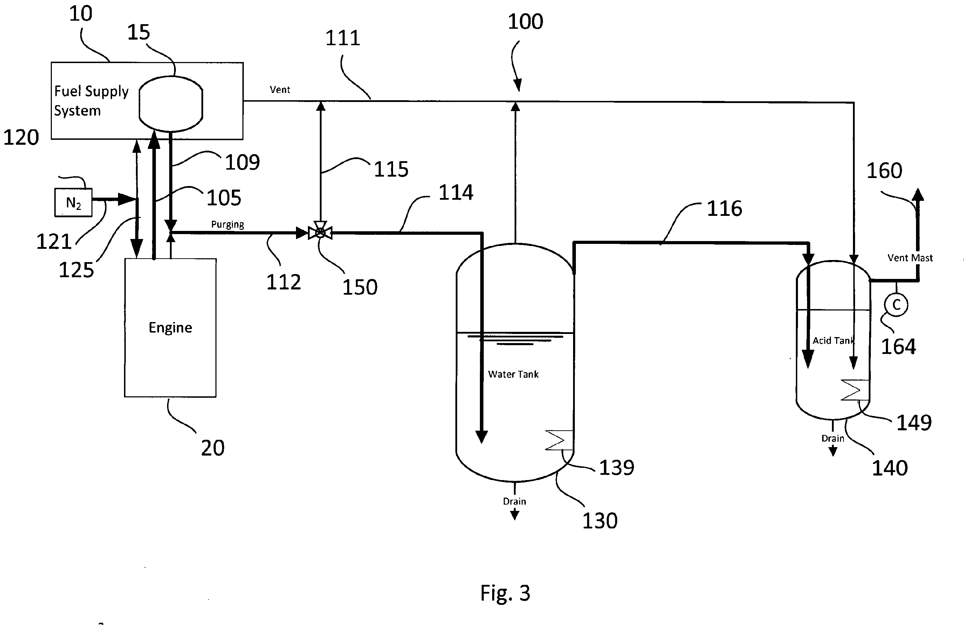

Reference is made to Fig. 2 which generally shows components of the ammonia mitigation system 100. The ammonia mitigation system is fluidly connected to and downstream of the engine 20 and the fuel supply system 10. An inert gas supply arrangement 120 is fluidly connected via a connecting supply line 121 and 123 to a fuel supply system 10 and via the connecting supply line 121 and 125 to the engine 20. The inert gas used for purging can be nitrogen, but could be any other type of inert gas. The inert gas may be generated on board of a vessel or it can be held in an inert gas tank, for example. Generally, a purging circuit may be provided with one or more nitrogen inlets and may comprise one or more pressure indicators and transmitters. The purged ammonia can be collected and returned to a catch tank as explained below in connection with Fig. 3.

The ammonia mitigation system 100 is thus aimed for ammonia-containing streams generated by vent gases and/or vent streams during purging of an ammonia supply system 10 and/or ammonia-fueled engine 20. The system 100 is arranged in fluid communication with an exhaust piping 160 leading the ammonia-containing streams with reduced ammonia content to the atmosphere. A chimney may be comprised in the exhaust piping 160.

As shown in Fig. 2, the system comprises a first ammonia mitigating device 130, herein also referred to as "water tank", and thus comprises a water tank filled with water. The first ammonia mitigating device contains water in a water tank, and the water absorbs ammonia and thereby reduces the ammonia content in the downstream gas stream. The water stored in the tank has a lower and higher water threshold levels in the tank, i.e. the level should be above the lower threshold level, but should not be above the higher threshold level. The respective threshold level can be determined according to the best practice in the technical field. The ammonia-containing streams are arranged to be supplied into the tank below the lower threshold level, so that it can be ensured that ammonia can be brought into contact with the water. The water level can be monitored with a water level monitoring device 133, which is arranged to monitor water level and alert when the water level is lower than the lower water threshold level or higher than the higher threshold level in the tank. The water level monitoring device 133 may be arranged in communication with a water filling device 135 via a link 137, which in-turn may be arranged in communication with a control system for the ammonia mitigation system. This in turn can be arranged in communication with a control system of the fuel supply system and/or the engine operation control system. The water filling device 135 may be configured to start to fill water to the first ammonia mitigating device 130, when the water level is lower than the higher water threshold level. That is, no water should be added if the water level is already at a maximum level, but water can be filled if the maximum level is not reached. Alternatively, water drain 131 may be opened if the water level is higher than the higher water threshold level.

The first ammonia mitigating device 130 may further comprise an ammonia content monitoring device 134 in communication with the drain device 131. The drain device 131 may be configured to start drain the water tank when the ammonia content in the water tank is above an ammonia threshold value. In that case, the water in the tank may not be suitable for absorbing ammonia anymore. Draining can be continued until the whole tank is drained, or until the lower threshold level of the water level is reached. Alternatively, or additionally clean fresh water can be filled by a water filling device 135, which may be configured to start to fill water when the ammonia content in the water tank is above the ammonia lower threshold value and below the higher water threshold level.

The ammonia mitigation system 100 further comprises a second ammonia mitigating device 140, herein also referred to as an "acid tank", and thus comprises an acid tank 140 storing an acid solution. The first and the second ammonia mitigation devices 130, 140 are connected by a connecting pipe 116. The ammonia may be absorbed and neutralized by the acid solution. The acid tank may have lower and higher threshold levels, i.e. the physical level in the tank. The ammonia-containing streams from the fuel supply system or engine may be arranged to be supplied into the tank below the lower threshold level. In this way it can be ensured that the ammonia in the streams will contact the acid solution and can be thereby neutralized. The level of the acid solution may be monitored by means of a level monitoring device 143 and it may be arranged to monitor acid solution level and alert when the acid solution level is lower than the lower threshold level or higher than a higher threshold level in the tank.

The ammonia mitigation system 100 may include a vacuum protection system 170 comprising a vacuum breaker and/or an air inlet connection activated by a pressure transmitter detecting low pressure. Thereby, the ammonia mitigation system is protected from vacuum. The vacuum protection system 170 may be located on the connecting pipe 116 between the water tank 130 and acid tank 140.

The second ammonia mitigating device may further comprise an acid content monitoring device 144. The acid monitoring device may monitor the acid content or the residual acidity of the acid solution, for example the pH. Thereby, information is obtained on whether the acid solution in the tank is still suitable for neutralizing ammonia that enters the tank. The acid monitoring device may be arranged in communication with an acid tank drain device 141 and/or an acid refill device configured to fill acid solution when the residual acidity in the second ammonia mitigating device is below a threshold. The acid refill device may comprise an acid tank 145 and an acid pump 146, which may be turned on when the acid solution needs to be filled to the acid tank 140. Valves and piping with automatic control arrangements may be associated with the acid refill device. The acid level monitoring device 143 and/or the acid content monitoring device 144 may be arranged in communication with the acid refill device and the drain device 141 via a link 147 to enable automatic control of the acid refill based on the acid level and/or content.

Ammonia absorption and neutralization are exothermic processes, releasing heat to water and/or acid solutions. For further control of the ammonia mitigation system, the first and/or second ammonia mitigating devices may each comprise a temperature monitoring device configured generate an alarm when the temperature in the first and/or second ammonia mitigating device is higher than a threshold temperature. In this way it is possible to take an action to reduce the temperature, leading to an higher ammonia absorption efficiency. According to an embodiment, the first and/or second ammonia mitigating devices may comprise a respective cooling device, such submerged cooling coil 139, 149. The cooling coil may be of any known type, and may be e.g. be filled with a cooling fluid and be connected to a cooling circuit. Alternatively, the cooling device may comprise an external cooling device connected to the first and/or second ammonia mitigation device.

The exhaust piping 160 may be fluidly connected to the second ammonia mitigating device. As explained more in detail below, during the use of the system, the ammonia streams will normally pass the acid tank 140. An ammonia gas detector 164 may be arranged in fluid communication with the released gases in the exhaust piping 160. The detector may be configured to generate an alarm when the ammonia content in the exhaust piping 160 is above a threshold. The system may further comprise a gas dilution system comprising a fan 163, which is fluidly connected to the exhaust piping 160. In case of too high ammonia content in the exhaust piping, the fan may be activated to bring in more air to the exhaust piping and thus dilute the ammonia stream thus reducing the ammonia concentration in the vent, before it is released to the atmosphere.

When the ammonia mitigation system is operated, the ammonia-containing streams from the ammonia fuel supply system venting are supplied to a first supply line 111, which is in fluid communication with the ammonia supply system and the first and second ammonia mitigating devices, where venting is the operation done by opening vent valves and let liquid ammonia vaporizing as a result of depressurization. Ammonia-containing streams of purging gases from the fuel supply system and the engine are supplied further in the system via a second supply line 112, which is in fluid communication with the ammonia-fueled engine 20 and the first and second ammonia mitigating devices 130; 140, where purging is the operation of ammonia displacement by means of pressurized inert gas. A valve device 150 connecting the first and second ammonia supply lines and the first and second ammonia mitigating devices 130, 140.

Below, examples of different modes of operating the system are described in more detail. As briefly discussed above, the ammonia streams may be in a first step supplied to the water tank for ammonia absorption followed by a second step of absorption into the acidic solution. The two-stage approach in series of the system and the method is based on the high hygroscopicity and on the caustic behavior of ammonia. Thanks to the two-stage approach, the proposed system and method can handle streams with a wide range of ammonia composition, from 100% ammonia to very low ammonia content in the inert gas.

Since the proposed system and method may comprise both water absorption and acid treatment, it can handle vent streams which are generated in an uncontrolled way, e.g. emergency vents, as well as vent streams generated during controlled operations, such as engine purging with inert gas followed by liquid ammonia recovery inside the fuel supply system. For this reason, the proposed solution can be classified as a "passive" solution, being always ready for receiving ammonia-containing streams, without any delay. The system is designed so that the received gas streams containing ammonia are treated differently depending on the upstream systems operating mode and therefore on different expected ammonia content. The received stream can be directed to the water tank and in series to the acid tank, i.e. a two-steps process, or directly to the acid tank bypassing the water tank, i.e. a single step process, if the expected amount of ammonia is lower. The proposed method can automatically handle the refill of the liquids needed for absorption when needed, by continuously monitoring the progressive level of contamination. The proposed method can also keep the temperature of both fluids under control. The water tank is equipped with continuous level monitoring, activating automatic water refill when low level is detected and activating an alarm when low level is detected. Additionally, the acid tank is equipped with continuous level monitoring, activating an alert when low level is detected and activating an alarm when low level is detected.

The valve device 150 may be a three-way valve and is normally open to the water tank. This is to ensure that a double stage ammonia removal can be performed even in case the valve is not activated or not working. Additionally, there is a free vapor connection between water tank and acid tank, and there is no obstruction in between.

As mentioned above, the system involves water tank temperature monitoring and alarm by means of temperature transmitters. Also, the system involves acid tank temperature monitoring and alarm by means of temperature transmitters. The exothermicity of the water absorption can be kept under control by means of cooling water coil and the exothermicity of the neutralization reaction can be kept under control by means of cooling water coil.

Further, the system involves monitoring of water quality, for example by monitoring the dissolved ammonia content by measuring the pH and/or the conductivity in the water tank. This enables automatic discharge and refill in case of increased level of contamination of water, that is when the water is no more suitable for ammonia absorption. In the same way the acidity solution quality is monitored, for example by measuring the pH and/or the conductivity of the solution. The monitoring results can then be used for automatic discharge and refill in case of decreased acidity and when the acid solution is no more suitable for ammonia neutralization.

In the system, the excess of gas can be vented through the exhaust gas piping to chimney. The exhaust gas piping can be equipped with a gas detector, which may continuously or at certain intervals monitor the level of ammonia in the gas stream, the gas detector may provide an alarm in case of exceeding threshold. All data in the system can be measured by the transmitters described above.

The measured data can be collected by a control unit of the ammonia mitigation system, which may be a part of the fuel supply system control unit. The data may be recorded and saved. It can be transferred to a cloud server. The cloud server may store and collect data, which may be stored periodically. Based on the data it is possible to provide operation information which can be used to detect need for maintenance or repair.

Reference is now made to different modes and methods of operating the ammonia mitigation system. Reference is made to Fig. 3, and the description below relating to operation of the ammonia mitigation system in emergency / engine liquid purging mode. The gas and ammonia streams in this mode are depicted with thick lines.

As mentioned above, the three-way valve 150 is normally kept open to the water tank 130, so that the purging stream 107 from the engine 20 and the purging stream 109 from the ammonia fuel supply system 10 passing through the supply line 112 upstream of the valve 150 can be passed to supply line 114 downstream of the valve 150 and further to the water tank 130.

When emergency or engine liquid purging sequence is activated by the ammonia-fueled engine, the following procedure can be handled by vent treatment or the ammonia mitigation system 100. Firstly, the fuel supply system 10 is shut down.

In the operation step 1, the engine pressure is released to a catch tank 15 via supply line 105. The catch tank 15 is located inside the fuel supply system 10. During this step, most of the ammonia is recovered as liquid in the catch tank 15. This generates the catch tank 15 venting to the ammonia vent treatment through supply line 109 and the stream comprises nitrogen containing ammonia. The nitrogen stream can be highly contaminated with ammonia at this phase, therefore it is directed to the water tank 130 via supply lines 109, 112, 114. The supply line 114 is at the water tank end submerged in water of the water tank 130. The supply line end may be connected to a gas distributor to ensure gas dispersion in water. Ammonia is absorbed into water, while nitrogen bubbles flow upwards through the water and then are released above the water liquid level. As long as nitrogen has a pressure higher than hydrostatic pressure of the submerged supply line into the downstream located acid tank 140, nitrogen can flow via supply line 116 to the acid tank 140 and through the acid tank 140. Remaining traces of ammonia are neutralized by means of an acid in the acid tank. The nitrogen is then released to the vent mast 160 or chimney.

In the step 2 the engine 20 is purged with nitrogen under pressure. The nitrogen is provided from the nitrogen source 120 via supply lines 121 and 125 fluidly connected to the engine 20. The purging with nitrogen removes liquid ammonia to the catch tank 15 inside the ammonia fuel supply system 10. This generates the catch tank 15 venting to the ammonia vent treatment through supply line 109 and the stream comprises nitrogen containing ammonia.. The nitrogen stream can still be highly contaminated with ammonia at this phase, therefore it is directed to water tank 130 via the supply line 112 and valve device 150, which is open towards the water tank 130, via supply line 114. The end of the supply line 114 is submerged into the water and gas distributor may be included to ensure gas dispersion in water. Ammonia is absorbed into water, while nitrogen bubbles flow upwards through the water and then are released above the water liquid level. As long as nitrogen has a pressure higher than hydrostatic pressure of submerged supply line 116 into acid tank, nitrogen can flow through the acid tank 140, where remaining traces of ammonia are neutralized by means of an acid. Clean nitrogen is then released to the vent mast 160 or chimney.

During both step 1 and step 2 of emergency / liquid purging phase, the heat released by ammonia dissolving into water and the heat of ammonia neutralization can be removed by cooling water flowing into two submerged coils 139, 149 inside respective water tank 130 and acid tank 140.

An ammonia gas detector 164 can be arranged to continuously monitor the content of ammonia in the gas stream released to vent mast 160 / chimney. If ammonia is close to the maximum allowable content for emission to atmosphere, the sensor gives an alarm and activate the dilution system 163 shown in Fig. 2, if present.

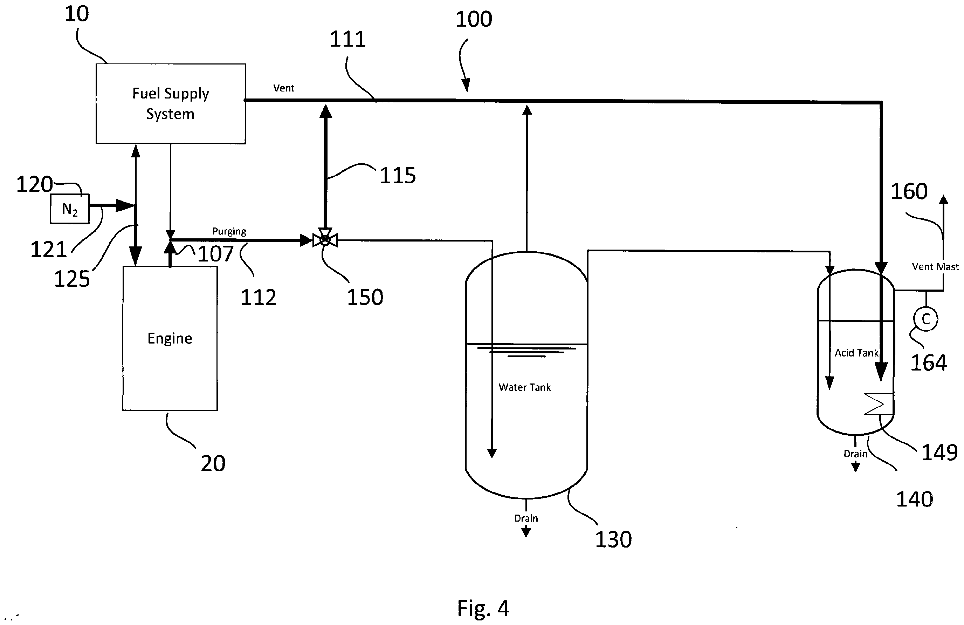

Reference is now made to Fig. 4, which shows a further mode of operating the ammonia mitigation system 100 in a mode referred to as an engine gas purging mode. This operating mode can handle vapors contaminated with ammonia generated during engine gas purging mode. In this mode, the three-way valve 150 is turned to acid tank 140 via supply lines 115 and 111. The engine 20 is purged with nitrogen under pressure, removing gaseous ammonia to the ammonia mitigation system 100. The content of ammonia into nitrogen stream is expected to be lower than during emergency / liquid purge described above in connection with Fig. 3. Therefore, nitrogen is directed to the acid tank 140 for the neutralization of residual ammonia. Submerged supply line 111 and a gas distributor ensure gas dispersion into the acid water. Ammonia is neutralized by means of the acid. Clean nitrogen is then release to the vent mast 160. During the gas purging phase, the heat released by ammonia neutralization is removed by cooling water flowing into submerged coil 149 inside the acid tank. Similarly as above, an ammonia gas detector 164 can continuously monitor the content of ammonia in the gas stream released to vent mast 160 / chimney. If ammonia is close to the maximum allowable content for emission to atmosphere, the sensor gives an alarm and activate the dilution system, which is an option of the current system and shown in Fig. 2.

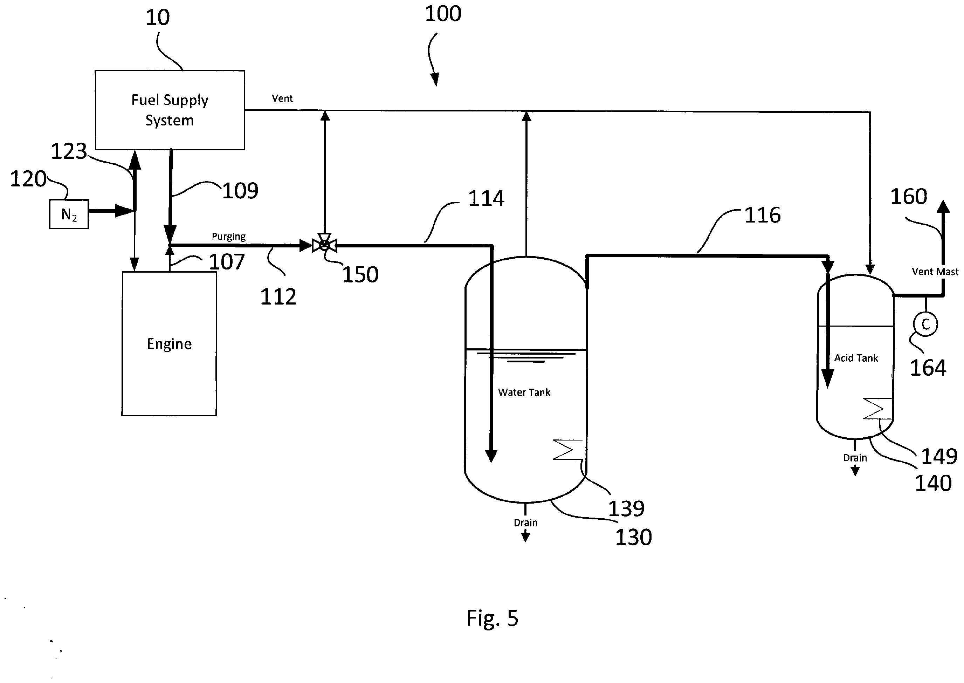

Reference is now made to Fig. 5, which shows a further mode of operating the ammonia mitigation system 100 in a mode referred to as ammonia mitigation system in ammonia fuel supply system purging mode. This operating mode can handle vapors contaminated with ammonia generated during fuel supply system 10 purging.

The three-way valve 150 is normally open to water tank 130. When fuel supply system 10 purging sequence is activated by the fuel supply system 10, the following procedure can be handled by the ammonia mitigation system 100. Firstly, the fuel supply system 10 is shut down. The fuel supply system 10 is then purged with nitrogen from nitrogen source 120 under pressure. This causes release of a vent stream containing nitrogen and ammonia to the ammonia vent treatment via supply line 109. The stream can be highly contaminated with ammonia in this phase, therefore it is directed to the water tank via supply line 112. Submerged supply line and gas distributor ensure gas dispersion in water. Ammonia is absorbed into water, while nitrogen bubbles flow upwards through the water and then are released above the water liquid level. As long as nitrogen has a pressure higher than hydrostatic pressure of submerged supply line into acid tank 140, nitrogen can flow through the acid tank 140, where remaining traces of ammonia are neutralized by means of an acid. Clean nitrogen is then released to the chimney / vent mast 160. During fuel supply system purging phase, the heat released by ammonia dissolving into water and the heat of ammonia neutralization are removed by cooling water flowing into two submerged coils 139, 149 inside both and respective water tank 130 and acid tank 140. Further, an ammonia gas detector 164 continuously monitors the content of ammonia in the gas stream released to vent mast / chimney. If ammonia is close to the maximum allowable content for emission to atmosphere, the sensor gives an alarm and activate the dilution system, if present.

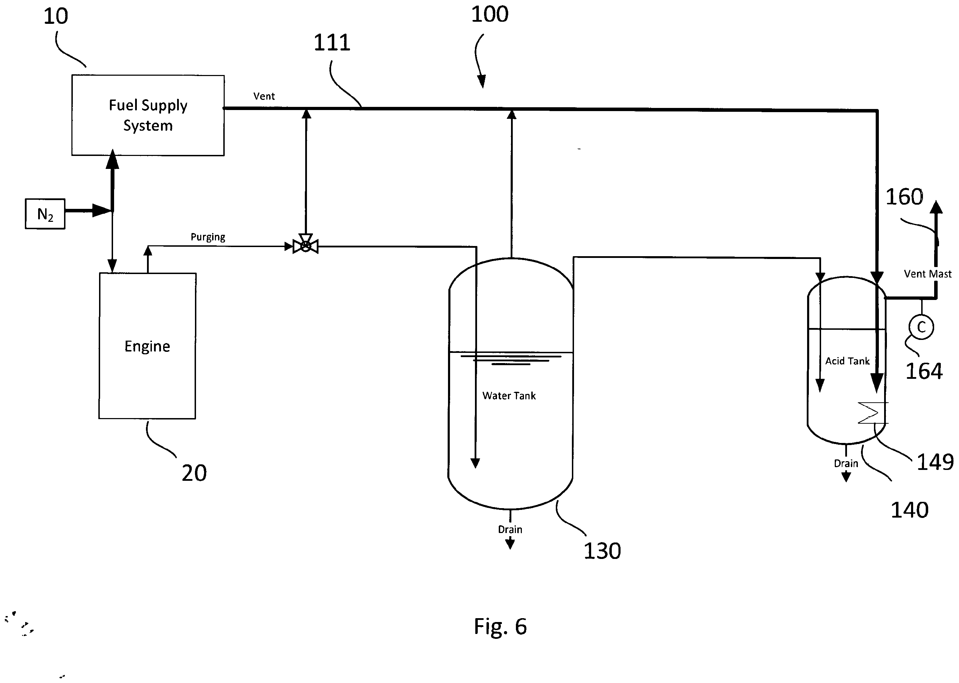

Reference is now made to Fig. 6, which shows a further mode of operating the ammonia mitigation system 100 in a mode referred to as ammonia mitigation system in vent mode. This operating mode can manage vapors contaminated with ammonia vent streams generated from fuel supply system 10 overpressure protecting devices and/or from ammonia tanks and/or from bleed valves. In this mode vents streams are released into a vent header, which is always open to acid tank via supply line 111. The vent header may be a vent supply line that connects a number of stack vents or vent valves providing venting in the system. The submerged supply line 111 and gas distributor ensure gas dispersion in acid water and ammonia is neutralized by means of the acid. The acid tank is open to the vent mast, while vacuum is prevented from occurring. During the vent mode, the heat released by ammonia neutralization is removed by cooling water flowing into submerged coil 149 inside the acid tank 140. Further, similarly as above, an ammonia gas detector 164 continuously monitors the content of ammonia in the gas stream released to vent mast 160 / chimney. If ammonia is close to the maximum allowable content for emission to atmosphere, the sensor gives an alarm and activate the dilution system, which is an option of the current system.

The proposed scheme of the ammonia vent mitigation system can be modified if the vent piping connections are different than what has been described above, for example the number of connections, compositions of the system can be varied. The proposed scheme of the ammonia vent mitigation system can be modified according to different ammonia-fueled engine purging methods. The type of acid can be varied. The system can be combined with a downstream dilution with air, if needed to achieve the maximum allowable ammonia concentration in the exhaust gas. Instead of using fluid cooled cooling coils, an external cooling system can be used instead. Additionally, an intermediate cooling water loop can be used in place of direct cooling with cooling water, to prevent water contamination in case of rupture. Further, the system can be provided with automatic acid refill from a dedicated additional tank.

The foregoing description of the embodiments has been furnished for illustrative and descriptive purposes. It is not intended to be exhaustive, or to limit the embodiments to the variations described. Many modifications and variations will obviously be apparent to one skilled in the art. The embodiments have been chosen and described in order to best explicate principles and practical applications, and to thereby enable one skilled in the art to understand the invention in terms of its various embodiments and with the various modifications that are applicable to its intended use. The components and features specified above may, within the framework of the disclosure, be combined between different embodiments specified.

## Claims

1. An ammonia mitigation system (100) for receiving ammonia-containing streams generated by vent gases and/or vent streams during purging of an ammonia fuel supply system (10) and/or ammonia-fueled engine (20), the system being in fluid communication with an exhaust piping (160) leading the ammonia-containing streams with reduced ammonia content to the atmosphere, the system comprising:
- a first ammonia mitigating device (130);
- a second ammonia mitigating device (140);
- a first supply line (111) for ammonia-containing streams arranged in fluid communication with the ammonia fuel supply system (10) and the first and second ammonia mitigating devices (130; 140);
- a second supply line (112) for ammonia-containing streams in fluid communication with the ammonia-fueled engine (20), the ammonia fuel supply system (10) and the first and second ammonia mitigating devices (130; 140); and
- a valve device (150) configured to fluidly connect the first and second supply lines, and the first and second ammonia mitigating devices (130; 140).

2. The ammonia mitigation system of claim 1, wherein the first ammonia mitigating device comprises a water tank storing water having a lower and higher water threshold levels in the tank, and wherein the ammonia-containing streams are arranged to be supplied into the tank below the lower threshold level.

3. The ammonia mitigation system of claim 2, wherein the first ammonia mitigating device comprises a water level monitoring device (133) arranged to monitor water level and alert when the water level is lower than the lower water threshold level or higher than the higher threshold level in the tank.

4. The ammonia mitigation system of claim 3, wherein the water level monitoring device (133) is arranged in communication with a water filling device (135) and a drain device (131), wherein
- the water filling device is configured to start to fill water to the first ammonia mitigating device (130), when the water level is lower than the lower water threshold level, or
- the drain device (131) is configured to open, when the water level is higher than the higher water threshold level.

5. The ammonia mitigation system of claim 4, wherein the first ammonia mitigating device comprises an ammonia content monitoring device (134) arranged in communication with:
- a drain configured to start draining when the ammonia content in the water tank is above an ammonia threshold value, and/or
- a water filling device (135) configured to start to fill water when the ammonia content in the water tank is above the ammonia threshold value and below the higher water threshold level.

6. The ammonia mitigation system of any one of the preceding claims, wherein the second ammonia mitigating device comprises an acid tank (140) storing an acid solution and having a lower and higher acid threshold levels in the tank, and wherein the ammonia-containing streams are arranged to be supplied into the tank below the lower threshold level.

7. The ammonia mitigation system of claim 6, wherein the second ammonia mitigating device comprises an acid level monitoring device (143) arranged to monitor acid level and alert when the acid level is lower than the lower threshold level or higher than the higher threshold level in the tank.

8. The ammonia mitigation system of claim 5 or 6, wherein the second ammonia mitigating device comprises an acid content monitoring device in communication with:
- an acid tank drain device (141) and/or an acid refill device (145, 146) configured to fill acid when acid content or acidity in the second ammonia mitigating device is below a threshold.

9. The ammonia mitigation system of any one of the preceding claims, wherein the first and/or second ammonia mitigating device (130; 140) comprises a temperature monitoring device configured generate an alarm when the temperature in the first and/or second ammonia mitigating device is higher than a threshold temperature.

10. The ammonia mitigation system of any one of the preceding claims, wherein the first and/or second ammonia mitigating device comprises or is connected to a cooling device.

11. The ammonia mitigation system of any one of the preceding claims, wherein the exhaust piping (160) is fluidly connected to the second ammonia mitigating device.

12. The ammonia mitigation system of any one of the preceding claims, wherein an ammonia gas detector (164) is arranged in fluid communication with the released gases in the exhaust piping (160) and is configured to generate an alarm when the ammonia content is above a threshold.

13. The ammonia mitigation system of any one of the preceding claims, wherein the system comprises a gas dilution system fluidly connected to the exhaust piping (160) and comprising a fan device (163) for exhaust gas dilution with air up to a limit threshold.

14. The ammonia mitigation system according to any one of the preceding claims, wherein the ammonia mitigation system is fluidly connected to a catch tank (15) inside the ammonia fuel supply system.

15. The ammonia mitigation system according to any one of the preceding claims, wherein the ammonia mitigation system (100) includes a vacuum protection system (170) comprising a vacuum breaker and/or an air inlet connection activated by a pressure transmitter configured to detect low pressure.

16. Method of operating the ammonia mitigation system (100) according to any one of the preceding claims, wherein the method comprises:
- supplying the gas and/or liquid ammonia stream from the ammonia fuel supply system (10) and/or the engine (20) to the second ammonia mitigation device (140), optionally via the first ammonia mitigation device (130), based on a mode the ammonia fuel supply system and/or the engine are operated upstream of the ammonia mitigation system, and
- releasing the mitigated stream to the atmosphere via the vent mast (160).

17. Method according to claim 16, wherein the ammonia mitigation system is fluidly connected to a catch tank (15) located inside the ammonia fuel supply system, wherein the upstream mode of operating the engine comprises shutting down the ammonia fuel supply system and performing emergency or engine liquid purging, and releasing engine pressure or supplying ammonia removed during purging of the engine to the catch tank, which is fluidly connected to the engine and the ammonia mitigation system, wherein the method of operating the ammonia mitigation system comprises:
- directing a gas/liquid stream from venting of the catch tank via a connecting supply line (109), to the first ammonia mitigating device (130), and
- subsequently directing the venting stream to the second ammonia mitigating device (140), and
- directing the ammonia mitigated venting stream to the vent mast (160) before releasing the stream to the atmosphere.

18. Method according to claim 16, wherein the mode of operating the ammonia mitigation system is performed during engine gas purging generating ammonia-containing streams and comprising:
- directing the ammonia-containing stream from the engine via the second supply line (112) and the valve device (150) to the second ammonia mitigation device (140) via the connecting supply lines (115) and (111), and
- directing the ammonia mitigated stream to the vent mast (160) before releasing the stream to the atmosphere.

19. Method according to claim 16, wherein the mode of operating the ammonia mitigation system is performed during ammonia fuel supply system purging generating ammonia-containing vent streams and comprising:
- directing the ammonia-containing vent stream from the ammonia fuel supply system via the connecting supply lines (109) and (112) and the valve device (150) and connecting supply line (114) to the first ammonia mitigation device (130),
- directing the ammonia-containing stream from the first ammonia mitigation device (130) to the second ammonia mitigation device (140) via the connecting supply lines (116) and (111), and
- directing the ammonia mitigated stream to the vent mast (160) before releasing the stream to the atmosphere.
